Europäisches Patentamt

European Patent Office

Office européen des brevets

(11) Numéro de publication: **0 533 567 B1**

(12) **FASCICULE DE BREVET EUROPEEN**

(45) Date de publication de fascicule du brevet: **21.06.95** (51) Int. Cl.⁶: **F02C  9/28**

(21) Numéro de dépôt: **92402545.5**

(22) Date de dépôt: **17.09.92**

(54) **Système de protection contre l'extinction d'une turbomachine en cas d'ingestion d'eau massive ou de grêles.**

(30) Priorité: **18.09.91 FR 9111473**

(43) Date de publication de la demande:
**24.03.93 Bulletin  93/12**

(45) Mention de la délivrance du brevet:
**21.06.95 Bulletin  95/25**

(84) Etats contractants désignés:
**DE FR GB**

(56) Documents cités:
**EP-A- 0 025 406**

(73) Titulaire: **SOCIETE NATIONALE D'ETUDE ET DE CONSTRUCTION DE MOTEURS D'AVIA-TION, "S.N.E.C.M.A."**
**2, Boulevard du Général Martial Valin**
**F-75015 Paris (FR)**

(72) Inventeur: **Mouton, Pierre Charles**
**19 Rue de la Mare aux Moines**
**F-91350 Grigny (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3. 10/3.0 9/3.3.3)

## Description

La présente invention a pour objet un système de protection contre l'extinction d'une turbomachine en cas d'ingestion d'eau massive ou de grêles.

Les turbomachines classiquement utilisées dans l'aviation comportent à l'amont au moins un compresseur axial qui fournit à la chambre de combustion, située à l'aval du compresseur, suffisamment d'air comprimé pour que celui-ci soit mélangé à une quantité de carburant convenable qui sera brûlé.

De tels compresseurs axiaux absorbent de façon frontale le débit d'air nécessaire au bon fonctionnement de la turbomachine mais peuvent aussi absorber, selon les conditions atmosphériques, de l'eau massive ou des grêles, par exemple lorsque l'avion rencontre un orage ou traverse un corps de nuages. L'eau ou les grêles ainsi absorbées peuvent alors créer des dysfonctionnements de la turbomachine.

Si le moteur fonctionne au régime plein gaz, le compresseur élèvera suffisamment la température de l'air qui le traverse et de l'eau ingérée pour que cette eau soit vaporisée et portée à une température suffisamment élevée pour ne pas provoquer l'extinction de la chambre de combustion.

Au contraire, si l'avion est sur la trajectoire de descente, en approche, en phase d'atterrissage, le moteur est au régime ralenti et le taux de compression est faible. Dans ce cas, l'eau peut parvenir à l'état liquide ou sous forme de particules de glace jusqu'à la chambre de combustion, provoquant l'extinction d'un ou plusieurs brûleurs, voire de la chambre de combustion et l'arrêt du moteur, impliquant ainsi un atterrissage particulièrement critique.

Le but de la présente invention est d'éviter de telles situations critiques par l'élévation automatique du régime de ralenti du moteur dès que la concentration d'eau détectée dans le moteur dépasse une limite donnée.

Les solutions apportées par l'art antérieur au problème de l'ingestion d'eau massive ou de grêles par les turbomachines consistent à placer sur le trajet de l'air qui doit être ingéré par la turbomachine des obstacles mécaniques ou des dispositifs séparateurs des particules de l'air, par exemple des écopes, séparateurs centrifuges ou capots de nez provoquant la déviation des particules. Toutefois, de telles conceptions sont plus ou moins complexes et ne sont pas totalement satisfaisantes.

Une autre solution de l'art antérieur consiste en l'intervention du pilote sur la manette des gaz pour augmenter le régime moteur lorsque l'avion traverse une zone de forte pluie ou d'orage qui est susceptible de créer un dysfonctionnement du moteur si le régime n'est pas augmenté. Une telle solution a pour inconvénient de nécessiter une intervention du pilote.

La présente invention a pour objet d'agir sur la régulation moteur grâce à l'utilisation de paramètres mesurés en fonctionnement sur le moteur, ces paramètres étant déjà utilisés à d'autres fins de contrôle et de régulation.

L'invention a donc pour avantage d'utiliser des paramètres mesurés par des capteurs existants, un dispositif électronique simple et peu coûteux et de ne pas nécessiter d'intervention pilote.

L'invention a donc pour objet un système comprenant au moins deux dispositifs principaux : un premier dispositif de détection de concentration critique d'eau dans le moteur comportant :

- l'acquisition des mesures de la température à la sortie du compresseur $T_3$, de la température à l'entrée du compresseur $T_2$, de la vitesse de rotation du moteur N,
- le calcul du point de fonctionnement $T_3 - T_2 = f(N^2)$
- la comparaison de ce point de fonctionnement à la limite critique $(T_3 - T_2)$ acceptable pour la turbomachine à la vitesse de rotation mesurée N, et un deuxième dispositif permettant l'élévation du régime de ralenti du moteur lorsqu'une concentration critique d'eau est détectée par le premier dispositif.

L'invention sera mieux comprise à la lecture de la description détaillée qui suit, faite en référence aux dessins annexés, donnés à titre d'exemples non limitatif et dans lesquels :

- la figure 1 montre deux courbes représentatives de l'élévation de température dans un compresseur en fonction de la vitesse de rotation du moteur, lorsque l'air est sec et lorsque l'air est chargé d'eau dans une concentration critique,
- la figure 2 montre deux courbes représentatives de l'évolution du rendement de combustion lorsque l'air est sec, et lorsque l'air est chargé d'eau dans une concentration critique,
- la figure 3 montre un schéma du système selon l'invention,
- la figure 4 représente un mode de réalisation de la présente invention.

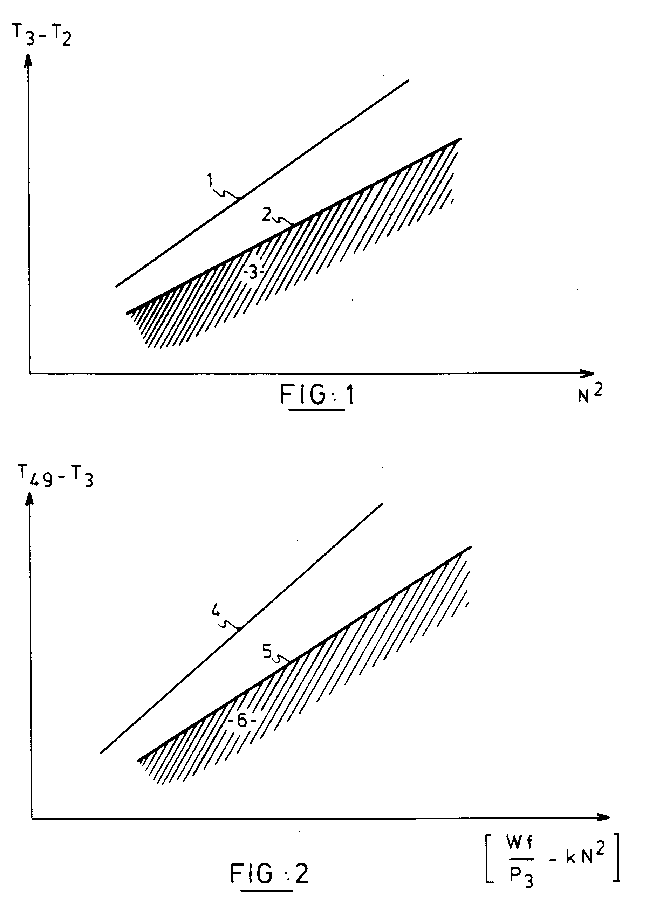

Le premier dispositif de détection de la concentration critique d'eau dans le moteur est basé, selon un mode de réalisation de l'invention, sur le fait qu'un compresseur élève la température de l'air qui le traverse selon des caractéristiques déterminées, illustrées par la figure 1, où sont tracées les courbes 1 et 2, représentatives de la différence de températures $\Delta T$ entre la sortie $T_3$ et l'entrée $T_2$ du compresseur en fonction de la vitesse de rotation du compresseur, lorsque l'air ingéré est sec suivant la courbe 1 et lorsque l'air contient une concentration critique d'eau suivant la courbe 2.

La différence de température Δ T est également fonction du degré hygrométrique de l'air absorbé par le compresseur. En effet, lorsque le compresseur comprime de l'air chargé d'eau, une partie de l'énergie fournie par le compresseur permet la vaporisation totale ou partielle de l'eau ingérée et la différence des températures entre la sortie et l'entrée du compresseur est alors plus faible que si l'air est sec.

Dans ces conditions et selon l'invention, le dispositif de détection de la concentration critique d'eau est basé sur la mesure des températures de l'air à l'entrée $T_2$ et à la sortie $T_3$ du compresseur, sur la mesure de la vitesse de rotation du compresseur N, sur le calcul de $\Delta T = T_3 - T_2$, et sur la comparaison du point de fonctionnement ainsi obtenu, $T_3 - T_2 = f(N^2)$, à la valeur critique de la différence de température, $\Delta T_c$ correspondant à la même vitesse de rotation du compresseur N.

Il est à noter que les courbes 1 et 2 représentées sur la figure 1 sont propres à chaque moteur et sont déterminées à partir des résultats d'essais, et que la courbe 2 est déterminée en fonction de la concentration d'eau maximum acceptable pour ne pas provoquer de dysfonctionnement du moteur.

Lorsque le point de fonctionnement mesuré du compresseur se situe dans la zone 3, selon la figure 1, le dispositif de détection de concentration critique d'eau joue son rôle par la transmission de cette information au deuxième dispositif permettant l'élévation du régime de ralenti du moteur.

Selon une variante de l'invention, un dispositif auxiliaire peut être adjoint au premier dispositif de détection de la concentration critique d'eau. Ce dispositif auxiliaire détecte également la concentration critique d'eau et permet ainsi la confirmation de l'information fournie par le premier dispositif.

Le dispositif auxiliaire est basé sur le fait que, au delà d'une concentration d'eau donnée, de l'eau non vaporisée par le compresseur pénètre dans la chambre de combustion. Dans un tel cas, le rendement de combustion est réduit, une partie de l'énergie fournie par la chambre de combustion étant utilisée à la vaporisation de l'eau.

Le dispositif auxiliaire est alors basé sur la mesure du rendement de combustion et, par exemple, par surveillance de la relation :

$$T_{49} - T_3 = f\left(\frac{Wf - kN^2}{P_3}\right)$$

où Wf = débit masse de carburant
$P_3$ = pression à la sortie du compresseur
N = vitesse de rotation de la turbine et du compresseur.
$T_{49}$ = température à la sortie de la turbine

$T_3$ = température à l'entrée de la chambre de combustion

La figure 2 représente les courbes 4 et 5 représentatives de la relation $T_{49} - T_3 = f(\frac{Wf}{P_3} - kN^2)$ lorsque l'air ingéré par la turbomachine est sec, suivant la courbe 4, et lorsque l'air contient une concentration critique d'eau, suivant la courbe 5.

Après mesure des paramètres de fonctionnement $W_F$, $P_3$, N, $T_{49}$ et $T_3$, les valeurs

$$\frac{(Wf - kN_2)}{P_3}$$

et $(T_{49} - T_3)$ sont calculées puis le point de fonctionnement ainsi obtenu est comparé à la valeur critique de $(T_{49} - T_3)_c$ correspondant au même

$$\frac{(Wf - kN_2)}{P_3}$$

que celui mesuré.

Sur la figure 2, on observe donc une concentration critique d'eau lorsque le point de fonctionnement se situe dans la zone hachurée 6. Si tel est le cas, le diagnostic établi par le premier dispositif de détection est confirmé par le dispositif auxiliaire et le système constitué de ces deux dispositifs est redondant. Une action peut alors être entreprise par le deuxième dispositif d'élévation du régime de ralenti du moteur.

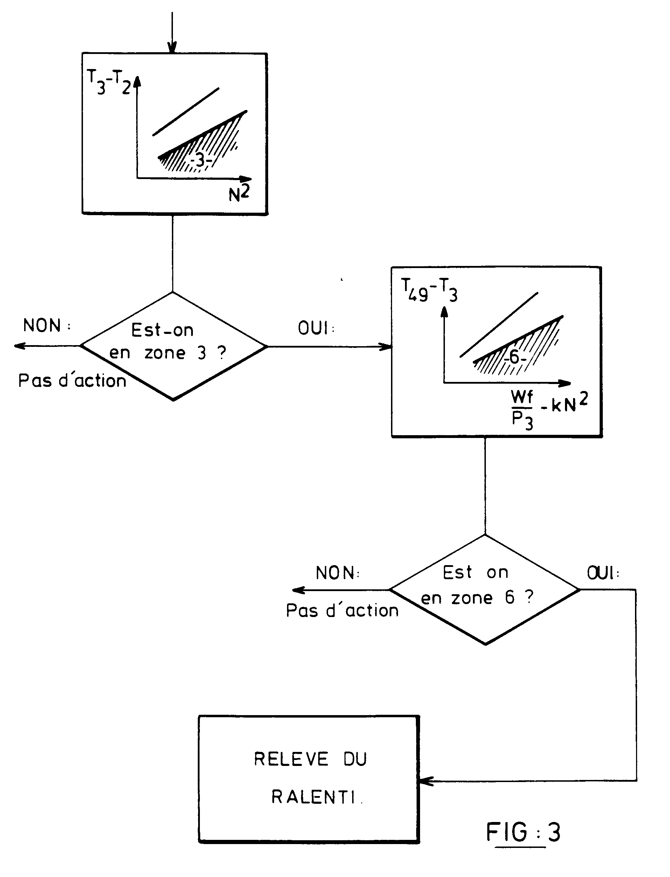

Le système préféré selon l'invention utilisant le dispositif redondant de détection de la concentration critique d'eau peut être globalement schématisé comme représenté en figure 3.

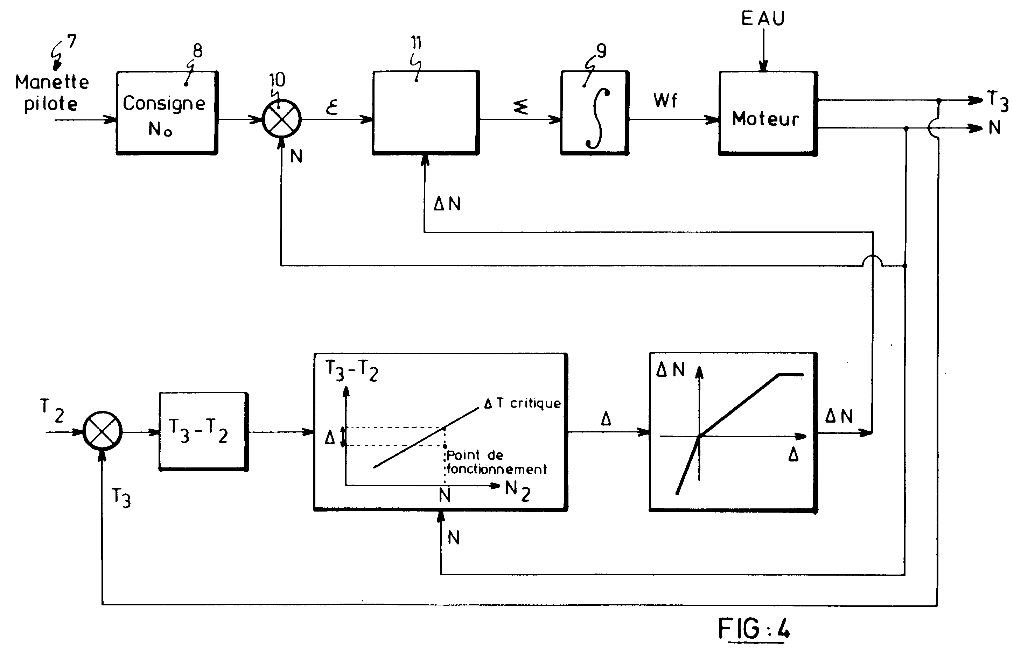

On donne ci-après un exemple de réalisation de l'invention, en référence à la figure 4 qui représente un schéma possible de la régulation moteur utilisant l'invention, sans redondance au niveau de la détection de la concentration critique d'eau.

Selon la position de la manette des gaz 7 du pilote, une consigne 8 de la vitesse de rotation du moteur $N_O$ est délivrée. Le calculateur du moteur fournit alors au doseur de carburant 9 les informations nécessaires pour que ce doseur délivre un débit de carburant Wf correspondant au régime moteur désiré. De manière à réguler convenablement le débit de carburant, la vitesse de rotation effective du moteur N est mesurée et comparée à la vitesse de consigne $N_0$ par un comparateur 10 pour obtenir l'écart de ces deux vitesses $\epsilon$ et corriger le débit de carburant afin d'obtenir une vitesse effective du moteur égale à la vitesse de consigne $N_o$.

Selon l'invention, les paramètres de température en sortie du compresseur $T_3$, à l'entrée du compresseur $T_2$, et la vitesse de rotation du moteur N sont mesurés.

Le calculateur effectue le calcul de la différence T3 - T2 et compare le point de fonctionnement $\Delta T = T_3 - T_2 = f(N^2)$ à la valeur critique $\Delta T_c$ correspondant à la vitesse de rotation N mesurée.

Si la différence de température $T_3 - T_2$ mesurée est inférieure au $\Delta T_c$ pour la vitesse de rotation du moteur N mesurée, le calculateur calcule un $\Delta$ correspondant à l'écart entre le $\Delta T$ mesuré et le $\Delta T_c$, puis le calculateur associe à cette valeur $\Delta$ un $\Delta N$ représentant l'augmentation nécessaire de la vitesse de rotation du moteur.

Ce $\Delta N$ sera comparé à $\epsilon$ par un circuit à prépondérance maximum 11, également dénommé "highest win", de type connu, fonctionnant à la manière d'une butée de décélération, c'est à dire que le circuit à prépondérance maximum 11 fournit au doseur 9 l'information représentant la plus grande valeur parmi $\epsilon$ et $\Delta N$ pour l'augmentation du débit de carburant Wf correspondant.

Une variante peut être apportée au mode de réalisation de l'invention décrit ci-dessus, par l'utilisation d'un dispositif auxiliaire de détection de la concentration critique d'eau basé sur le calcul du rendement de la chambre de combustion. Le système de détection de la concentration critique d'eau fonctionne alors en double détente, le dispositif auxiliaire permettant d'éliminer les fausses alarmes dues à un éventuel dysfonctionnement du premier dispositif de détection.

D'après la description qui a été faite ci-dessus, il ressort que l'invention a pour avantage d'utiliser des paramètres déjà mesurés à d'autres fins de régulation de la turbomachine et couramment utilisés dans les régulations électroniques modernes dites FADEC.

Il conviendra, pour la mise en oeuvre de l'invention, de prédéfinir, à l'aide des résultats d'essais, les limites critiques propres à chaque moteur et de vérifier, en cours de fonctionnement du moteur, que celui-ci fonctionne bien dans les champs définis, selon des lois cohérentes.

Par ailleurs, le système selon l'invention doit être tel que la régulation qui commande la réaccélération du moteur en cas d'ingestion d'eau prenne également en compte la protection contre le pompage et le décrochage. A cette fin, des dispositifs connus peuvent être utilisés.

**Revendications**

1. Système de protection contre l'extinction d'une turbomachine en cas d'ingestion d'eau massive ou de grêles, caractérisé en ce qu'il comprend au moins un premier dispositif de détection de la concentration critique d'eau dans ladite turbomachine, comportant

   - l'acquisition des mesures de la température à la sortie du compresseur $T_3$, de la température à l'entrée du compresseur $T_2$, de la vitesse de rotation du moteur N,
   - le calcul du point de fonctionnement

   $$T_3 - T_2 = f(N^2)$$

   - la comparaison de ce point de fonctionnement à la limite critique $(T_3 - T_2)$ acceptable pour la turbomachine à la vitesse de rotation mesurée N, ledit premier dispositif étant couplé à un deuxième dispositif permettant l'élévation automatique du régime de ladite turbomachine lorsqu'une concentration critique d'eau est détectée par ledit premier dispositif.

2. Système selon la revendication 1 caractérisé en ce que l'on adjoint au premier dispositif de détection de la concentration critique d'eau un dispositif auxiliaire de détection de la concentration critique d'eau basé sur la détection d'un phénomène indépendant de celui utilisé par ledit premier dispositif.

3. Système selon la revendication 2 caractérisé en ce que le dispositif auxiliaire est basé sur la surveillance du rendement de combustion.

4. Système selon la revendication 3 caractérisé en ce que le rendement de combustion est exprimé par la relation

$$T_{49} - T_3 = f\left(\frac{Wf - KN^2}{P_3}\right)$$

dans laquelle $T_{49}$ = température à la sortie de la turbine.

$T_3$ = température à l'entrée de la chambre de combustion

Wf = débit-masse de carburant

$P_3$ = pression à la sortie du compresseur

N = vitesse de rotation du moteur

et en ce que ledit dispositif auxiliaire comprend

   - l'acquisition des mesures de T49, T3,Wf,P3 et N

- le calcul du point de fonctionnement

$$T_{49} - T_3 = f\left(\frac{Wf}{P_3} - KN^2\right)$$

- la comparaison de ce point de fonctionnement à la limite critique ($T_{49} - T_3$) acceptable pour la turbomachine pour la valeur de

$$\frac{(Wf - KN^2)}{P_3}$$

calculée à partir des mesures.

5. Système selon l'une quelconque des revendications 1 à 4, caractérisé en ce que ledit premier dispositif de détection fournit audit deuxième dispositif une information d'augmentation du régime moteur, lorsqu'une concentration critique d'eau est détectée, ledit deuxième dispositif comprenant un circuit à prépondérance maximum qui compare l'information d'augmentation du régime moteur issu du premier dispositif à l'information issue de la régulation du régime moteur par rapport à la consigne fournie par la position de la manette des gaz, ledit circuit à prépondérance maximum fournissant au doseur de carburant l'information la plus grande parmi les deux informations susdites, Le doseur délivrant la quantité de carburant correspondant à l'augmentation nécessaire du régime moteur.

6. Système selon l'une quelconque des revendications 1 à 5 caractérisé en ce qu'il comprend également une protection contre le pompage et/ou le décrochage de la turbomachine.

**Claims**

1. System for protection against the extinguishing of a turbine engine in the event of massive ingestion of water or ingestion of hail, characterized in that it comprises at least one first device for detecting the critical concentration of water in the said turbine engine, comprising
   - the acquisition of measurements of the temperature at the outlet of the compressor $T_3$, of the temperature at the inlet of the compressor $T_2$, of the speed of rotation N of the engine,
   - the calculation of the operating point

$$T_3 - T_2 = f(N^2)$$

   - the comparison of this operating point with the critical limit ($T_3 - T_2$) acceptable for the turbine engine at the measured speed of rotation N, the said first device being coupled to a second device allowing automatic increase of the running speed of the said turbine engine when a critical concentration of water is detected by the said first device.

2. System according to Claim 1, characterized in that an auxiliary device for detecting the critical concentration of water, based on the detection of a phenomenon independent of that used by the said first device, is added to the first device for detecting the critical concentration of water.

3. System according to Claim 2, characterized in that the auxiliary device is based on monitoring the combustion efficiency.

4. System according to Claim 3, characterized in that the combustion efficiency is expressed by the relationship

$$T_{49} - T_3 = f\left(\frac{Wf}{P_3} - KN^2\right)$$

in which

$T_{49}$ = temperature at the outlet of the turbine

$T_3$ = temperature at the inlet of the combustion chamber

Wf = mass flow rate of fuel

$P_3$ = pressure at the outlet of the compressor

N = speed of rotation of the engine

and in that the said auxiliary device comprises
   - the acquisition of measurements of T49, T3, Wf, P3 and N
   - the calculation of the operating point

$$T_{49} - T_3 = f\left(\frac{Wf}{P_3} - KN^2\right)$$

   - the comparison of this operating point with the critical limit ($T_{49} - T_3$) acceptable for the turbine engine for the value of

$$\left( \frac{Wf}{P_3} - KN^2 \right)$$

calculated on the basis of the measurements.

5.  System according to any one of Claims 1 to 4, characterized in that the said first detection device supplies the said second detection device with information for increasing the engine working speed, when a critical concentration of water is detected, the said second device comprising a maximum-significance circuit which compares the information, for increasing the engine working speed, output of the first device with the information output of the regulation of the motor working speed with respect to the set-point supplied by the position of the gas throttle lever, the said maximum-significance circuit supplying the fuel metering device with the largest information of the two aforementioned information items, the metering device delivering the quantity of fuel corresponding to the necessary increase of the engine working speed.

6.  System according to any one of Claims 1 to 5, characterized in that it also comprises a protection against surge and/or stall of the turbine engine.

**Patentansprüche**

1.  Schutzvorrichtung gegen das Abschalten einer Turbomaschine bei starkem Eindringen von Wasser oder Hagel,
    **dadurch gekennzeichnet,**
    daß sie wenigstens eine erste Erfassungsvorrichtung für die kritische Wasserkonzentration in der Turbomaschine aufweist mit
    -  einer Meßwerterfassung der Temperatur $T_3$ am Kompressorausgang, der Temperatur $T_2$ am Kompressoreingang der Drehzahl N des Motors,
    -  der Betriebspunktberechnung $T_3 - T_2 = f(N^2)$ und
    -  dem Vergleich dieses Betriebspunkts mit der kritischen Grenze ($T_3 - T_2$), die für die Turbomaschine bei der gemessenen Drehzahl N zulässig ist,
    wobei die erste Vorrichtung mit einer zweiten Vorrichtung gekoppelt ist, die das automatische Anheben des Betriebsbereichs der Turbomaschine gestattet, wenn eine kritische Wasserkonzentration durch die erste Vorrichtung erfaßt ist.

2.  Vorrichtung nach Anspruch 1,
    **dadurch gekennzeichnet,**
    daß der ersten Erfassungsvorrichtung für die kritische Wasserkonzentration eine Hilfsvorrichtung zugeordnet ist zur Erfassung der kritischen Wassermenge auf Grundlage der Erfassung einer Meßgröße, die unabhängig von der ist, die für die erste Vorrichtung verwendet ist.

3.  Vorrichtung nach Anspruch 2,
    **dadurch gekennzeichnet,**
    daß die Hilfsvorrichtung die Überwachung des Verbrennungs-Wirkungsgrads zur Grundlage hat.

4.  Vorrichtung nach Anspruch 3,
    **dadurch gekennzeichnet,**
    daß der Verbrennungs-Wirkungsgrad durch die folgende Gleichung gegeben ist:

$$T_{49} - T_3 = f\left( \frac{Wf}{P_3} - KN^2 \right)$$

bei der $T_{49}$ = die Temperatur am Turbinenausgang,
    $T_3$ = die Temperatur am Eingang der Verbrennungskammer,
    Wf = der Brennstoff-Massendurchfluß,
    $P_3$ = der Druck am Kompressorausgang und
    N = die Drehzahl des Motors, und
    daß die Hilfvorrichtung aufweist
    -  die Meßwerterfassung von $T_{49}$, $T_3$, Wf, $P_3$ und N
    -  die Betriebspunkt-Berechnung

$$T_{49} - T_3 = f\left( \frac{Wf - KN^2}{P_3} \right)$$

-  den Vergleich dieses Betriebspunktes mit der kritischen Grenze ($T_{49} - T_3$), die für die Turbomaschine für den Wert von

$$\left( \frac{Wf - KN^2}{P_3} \right)$$

zulässig ist, der auf Grundlage der Meßwerte berechnet ist.

5.  Vorrichtung nach einem der Ansprüche 1 bis 4,

**dadurch gekennzeichnet,**

daß die erste Erfassungsvorrichtung eine Information zur Erhöhung des Motor-Betriebsbereichs an die zweite Vorrichtung gibt, wenn eine kritische Wasserkonzentration erfaßt ist, wobei die zweite Vorrichtung eine Schaltung mit höchster Vorrangstellung aufweist, die die Information zur Erhöhung des Motor-Betriebsbereichs, die von der ersten Vorrichtung ausgegeben ist, mit der Information vergleicht, die bei der Regelung des Motor-Betriebsbereichs bezüglich der Anweisung ausgegeben wird, die durch die Stellung des Gashebels geliefert wird, wobei die Schaltung mit höchster Vorrangstellung dem Brennstoff-Dosierer die größere von den beiden genannten Informationen zuführt, wobei der Dosierer die Brennstoffmenge liefert, die der notwendigen Erhöhung des Motor-Betriebsbereichs entspricht.

6.  Vorrichtung nach einem der Ansprüche 1 bis 5,
    **dadurch gekennzeichnet,**
    daß sie weiterhin einen Schutz gegen ein Pendeln und/oder Abreissen der Turbomaschine aufweist.

FIG·1

FIG·2

$T_3 - T_2$

$N^2$

-3-

NON :

Pas d'action

Est-on
en zone 3 ?

OUI :

$T_{49} - T_3$

$\dfrac{Wf}{P_3} - kN^2$

-6-

NON :

Pas d'action

Est on
en zone 6 ?

OUI :

RELEVE DU
RALENTI.

FIG : 3

FIG : 4

EP 0 533 567 B1